# EUROPÄISCHE PATENTSCHRIFT

(11) **EP 0 941 201 B1**
(45) Veröffentlichungstag und Bekanntmachung des Hinweises auf die Patenterteilung: **16.04.2003**
(21) Anmeldenummer: 98949948.8
(22) Anmeldetag: 02.10.1998
(51) Int. Cl.: B64C 11/38

(54) **HYDRAULISCH REVERSIERBARE VERSTELLPROPELLER-EINHEIT**
ADJUSTABLE PROPELLER UNIT WHICH CAN BE HYDRAULICALLY REVERSED
UNITE HELICE A PAS VARIABLE HYDRAULIQUEMENT REVERSIBLE

(30) Priorität: 02.10.1997 DE 19743739
(43) Veröffentlichungstag der Anmeldung: 15.09.1999
(73) Patentinhaber: Mühlbauer Luftfahrttechnik GmbH, 94369 Rain (DE)
(72) Erfinder: MÜHLBAUER, Gerd, D-94369 Rain (DE)
(74) Vertreter: Helms, Joachim, Dipl.-Ing. Patentanwalt
(86) Internationale Anmeldenummer: DE9802963
(87) Internationale Veröffentlichungsnummer: WO99017985

(56) Entgegenhaltungen:
- DE-A- 19 600 660
- US-A- 3 380 535
- US-A- 4 097 189

## Beschreibung

Die Erfindung betrifft eine hydraulisch reversierbare Verstellpropeller-Einheit für Luft-, Land-und Wasserfahrzeuge mit einem Propeller mit mindestens zwei Blättern, deren Blattwinkel mittels einer Steuereinheit (Regler) regelbar ist, wobei zwischen dem umlaufenden Propeller und der feststehenden Steuereinheit für die Blattwinkelansteuerung eine hydraulische Verbindung besteht, mit einem mittels eines Hydraulikfluids beaufschlagbaren, federvorgespannten Kolben und einstellbaren mechanischen Anschlägen für die Startstellung, Bremsstellung und/oder Reise-/Segelstellung gemäß dem Oberbegriff des Anspruchs 1.

Zur Verkürzung der Landestrecken von Luftfahrzeugen oder zur Verbesserung der Manövrierfähigkeit von Luftschiffen, amphibischen Luftfahrzeugen oder Luftkissenbooten (Hovercrafts) werden vorzugsweise Propeller mit einer hydraulischen Einrichtung für Umkehrschub (reversierbare Propeller) eingesetzt. Dazu gibt es verschiedene bekannte Vorrichtungen und Verfahren. Diese bekannten Vorrichtungen und Verfahren haben bestimmte Vorteile, z.B. die stufenlose Vorwahl des Blattwinkels und der zugeordneten Triebwerksleistung im sogenannten Beta-Bereich (Blattwinkel flacher als für Startstellung) mittels nur einem Leistungshebel. Diese Vorrichtungen weisen allerdings ebenfalls erhebliche Nachteile auf, z.B. eine aufwendige Vorrichtung für die Blattwinkeleinstellung, die über ein verstellbares Hydraulikventil erfolgt, das mit dem umlaufenden Propeller ständig in Verbindung stehen muß. Bei vielen bekannten Triebwerken ist es nur unter unverhältnismäßig hohem Aufwand möglich, solche bekannten Systeme zu installieren. Störungen an einer derartigen Vorrichtung stellen ein hohes Sicherheitsrisiko im Flug- als auch im Bodenbetrieb dar.

Bei einer bekannten hydraulisch reversierbaren Verstellpropeller-Einheit (DE-19600660) ist ein mittels Tellerfedern vorgespannter Anschlag für die Startstellung vorgesehen, der zur Verstellung der Blattwinkel auf Bremsstellung(Reverse) mittels eines Hochdruckhydraulikfluids überwindbar und bis auf einen mechanischen Anschlag für die Bremsstellung (Reverse) verstellbar ist, um einen Negativen Schub zu erzeugen.

Durch eine derartige Vorrichtung erübrigt sich eine laufende, direkte Verbindung zwischen dem umlaufenden Propeller und der üblicherweise am Triebwerksgehäuse installierten Steuereinheit (Regler). Bei einem etwaigen Druckverlust verstellen sich die Blätter automatisch aus dem negativen Blattwinkel zurück auf einen positiven Blattwinkel, um den Normalbetrieb zu gewährleisten.

Es hat sich jedoch gezeigt, daß für bestimmte Verwendungen der Verstellpropeller-Einheit, z.B. bei Wasserflugzeugen, die Tellerfedern zur Korrosion neigen, wodurch die Arbeitsweise der Verstellpropeller-Einheit beeinträchtigt wird.

Es ist deshalb Aufgabe der Erfindung, eine hydraulisch reversierbare Verstellpropeller-Einheit der eingangs genannten Art derart weiterzubilden, daß die Betriebssicherheit, auch bei Einsätzen in feuchter oder aggressiver Umgebung erhöht wird.

Diese Aufgabe wird durch die in Anspruch 1 gekennzeichnete Erfindung gelöst, d.h. dadurch, daß der Kolben als federvorgespannter Doppelkolben, bestehend aus einem Innenkolben und einem darum angeordneten Ringkolben, die beide mittels einer Fliehkraftsperre miteinander verriegelbar sind, ausgebildet ist, daß der Anschlag für die Startstellung zur Begrenzung des Verstellweges des verriegelten Doppelkolbens ausgebildet ist, um unbeabsichtigtes Reversieren bei Drehzahlen von über etwa 1500 UPM zu verhindern und daß die Bremsstellung nur bei entriegeltem Innenkolben und Propeller-Drehzahlen unter etwa 1500 UPM erreichbar ist, wenn sich der Propellerregler im Hochdruckbereich befindet.

Bei der erfindungsgemäßen Verstellpropeller-Einheit können die Tellerfedern der bekannten Verstellpropeller-Einheit entfallen, da die Verstellung des Propellers in den Umkehrschub mittels des in dem Doppelkolben angeordneten Innenkolbens erfolgt, der bei Erreichen einer Drehzahl von unter ca. 1500 UPM entriegelt wird, damit mit dem Propellerregler im Hochdruckbereich Bremsstellung erreicht werden kann.

Vorteilhafte Ausgestaltungen der Erfindung ergeben sich aus den Unteransprüchen.

So ist gemäß einer weiteren vorteilhaften Ausgestaltung der Erfindung vorgesehen, daß die Steuereinheit (Regler) zur Schaffung von zwei unterschiedlichen Servodrücken ausgebildet ist, die einen Normaldruck für positiven Schub zum normalen Vorwärtsbetrieb von ca. 12 - 22 bar und einen Hochdruck für negativen Schub zum Bremsbetrieb (Reverse) von ca. 32 - 48 bar umfassen.

In der Nabe des Propellers befindet sich ein mechanischer Anschlag für die Startstellung. Die hydraulische Steuereinheit (Regler) weist zwei Überdruckventile auf, wodurch im Normalbetrieb ein Verstelldruck von ca. 12 - 22 bar für den Doppelkolben und im Reversierbetrieb ein Verstelldruck von ca. 32 - 48 bar für den Innenkolben erzeugt wird, um die Propellerblätter im sogenannten Betabereich bis auf negative Blattwinkel für Bremsstellung zu verstellen. Dabei ist das Hochdruck-Hydraulikfluid ungeregelt, um Überdrehzahlen zu verhindern.

Gemäß einer weiteren vorteilhaften Ausgestaltung der Erfindung ist vorgesehen, daß ein elektrisch oder mechanisch ansteuerbares Schaltventil zur Umschaltung der Steuereinheit von Normaldruck auf Hochdruck bzw. von Hochdruck auf Normaldruck vorgesehen ist.

Gemäß einer weiteren vorteilhaften Ausgestaltung der Erfindung ist vorgesehen, daß in der Steuereinheit ein Sicherheitsventil vorgesehen ist, das im Normalbetrieb den Druck auf Normaldruck begrenzt, um ein unbeabsichtigtes Reversieren des Propellers zu verhindern.

Schließlich kann gemäß einer weiteren vorteilhaften Ausgestaltung der Erfindung in der Steuereinheit in der Hochdruckstufe ein Blattwinkelregler vorgesehen sein, der eine vom Servodruck abhängige stufenlose Blattwinkeleinstellung im Betabereich ermöglicht.

Mit einer derartigen Anordnung kann der dem Blattwinkel zugeordnete Hydraulikdruck geregelt werden, um damit eine stufenlose, der Triebwerksleistung entsprechende Blattwinkeleinstellung im Betabereich zu erreichen.

Ein Ausführungsbeispiel der Erfindung ist in der Zeichnung dargestellt und wird im folgenden näher beschrieben. Es zeigen:
Fig.1 eine geschnittene Ansicht der Propellernabe, wobei sich die Verstellpropeller-Einheit in der Stellung für große Steigung (Segelstellung) befindet;
Fig. 2 eine geschnittene Ansicht der Propellernabe, wobei sich die Verstellpropeller-Einheit in der Startstellung befindet;
Fig.3 eine geschnittene Ansicht der Propellernabe, wobei sich die Verstellpropeller-Einheit in der Bremsstellung befindet; und
Fig.4a eine schematische Darstellung der Steuereinheit im ND-Betrieb, und
Fig.4b eine schematische Darstellung der Steuereinheit im HD-Betrieb.

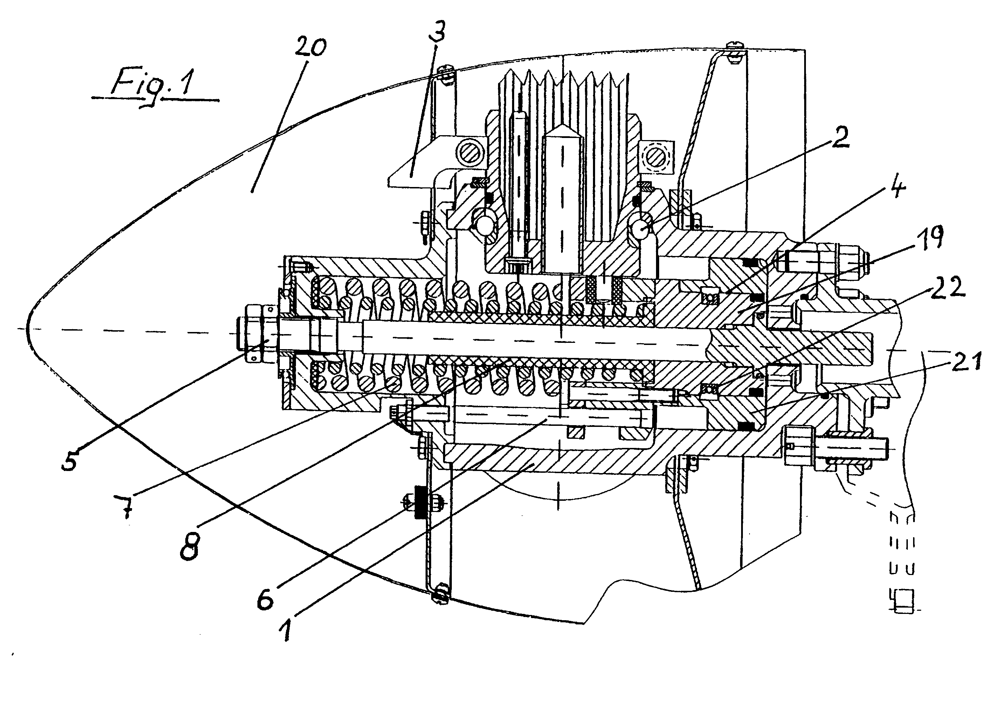

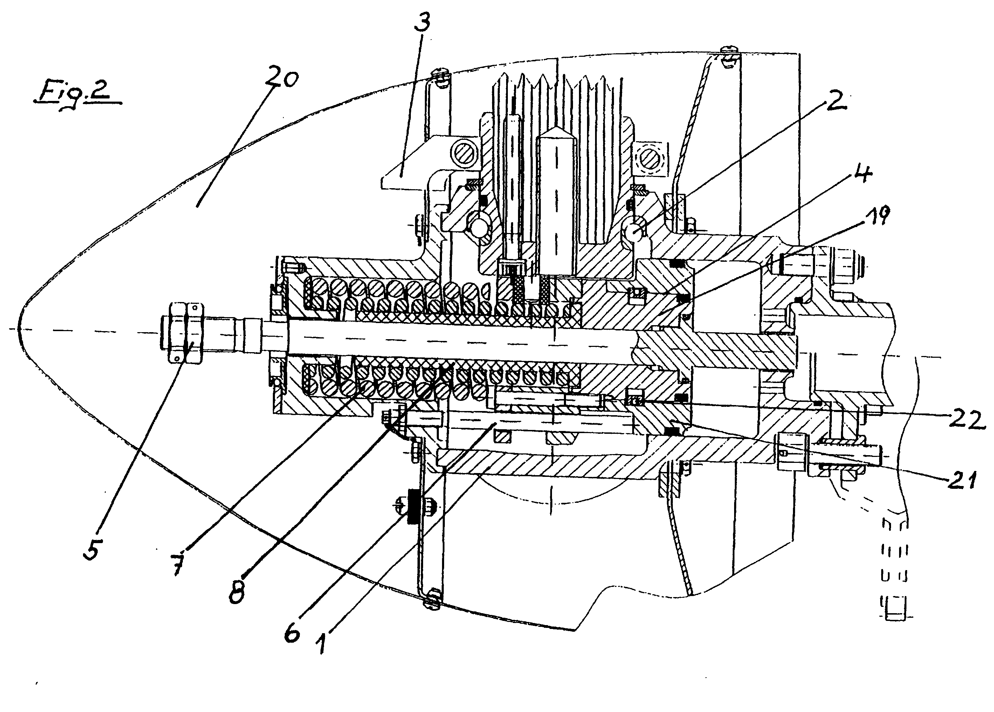

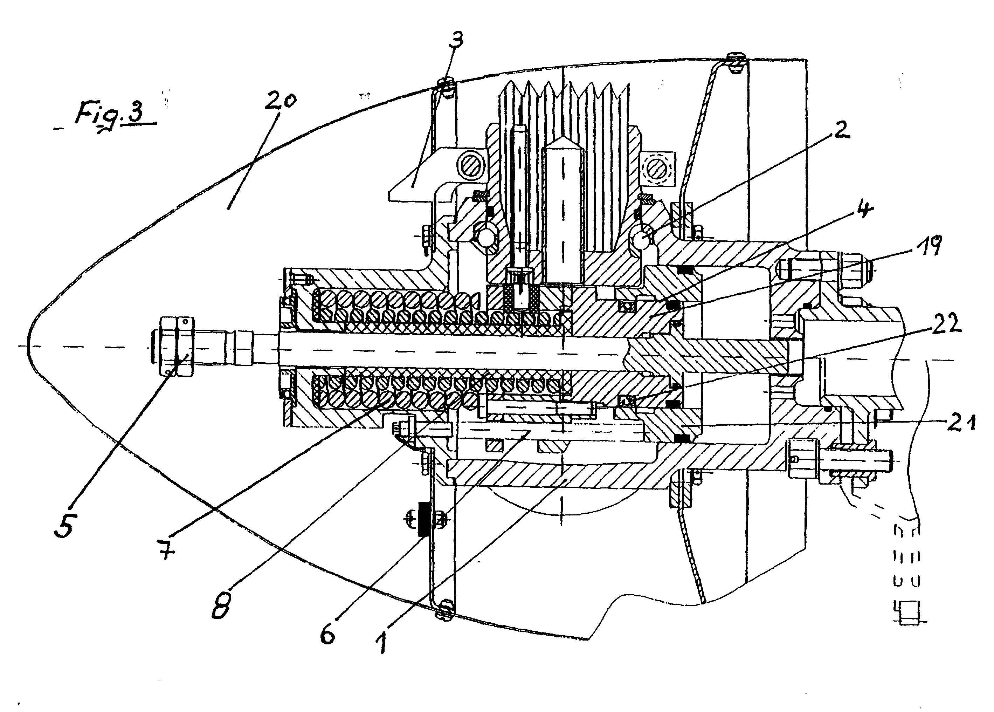

Die in Fig. 1 bis 3 dargestellte Verstellpropeller Einheit 20 zeigt eine mögliche Ausführung eines reversierbaren Verstellpropellers mit den wesentlichen Teilen eines derartigen Propellers, d.h. einer Nabe 1, mindestens zwei Blattlagerungen 2 für die Propellerblätter, Fliehgewichten 3, einem Servokolben 4 für die Blattverstellung, einem mechanischen Anschlag 5 für Reise-oder Segelstellung, einem mechanischen Anschlag 6 für die Startstellung, Schraubenfedern 7 und mit einem mechanischen Anschlag 8 für die Bremsstellung (Reverse). Der Servokolben 4 ist als Doppelkolben, bestehend aus einem Innenkolben 19 und einem darum angeordneten Ringkolben 21, die beide mittels einer Fliehkraftsperre 22 miteinander verriegelbar sind, ausgebildet.

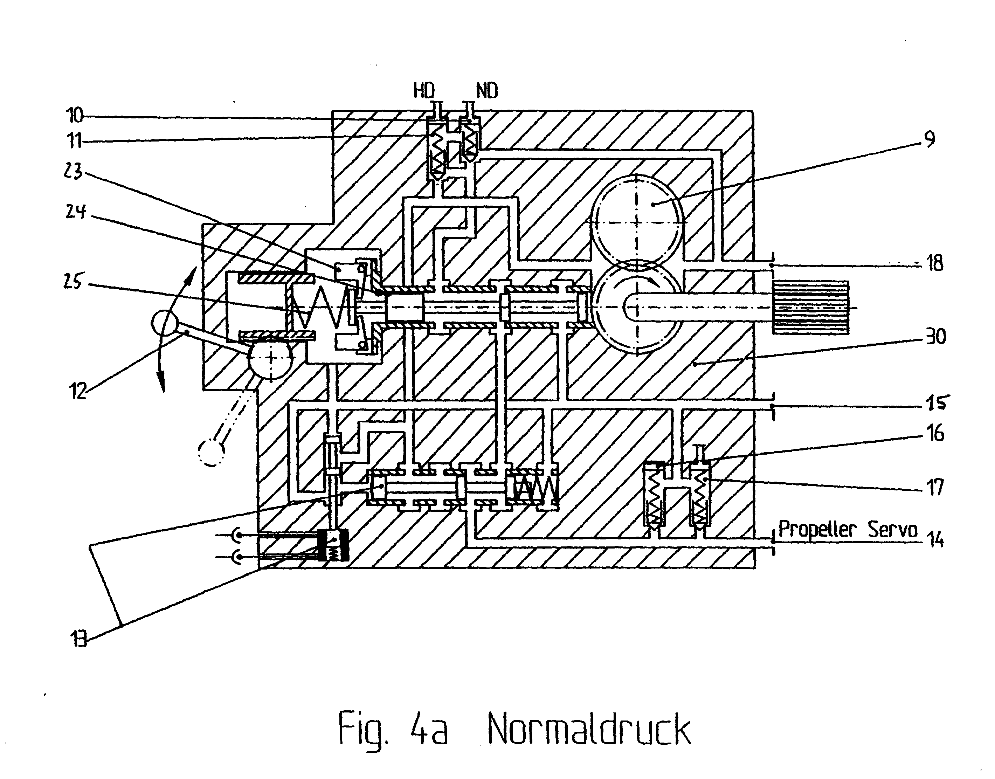

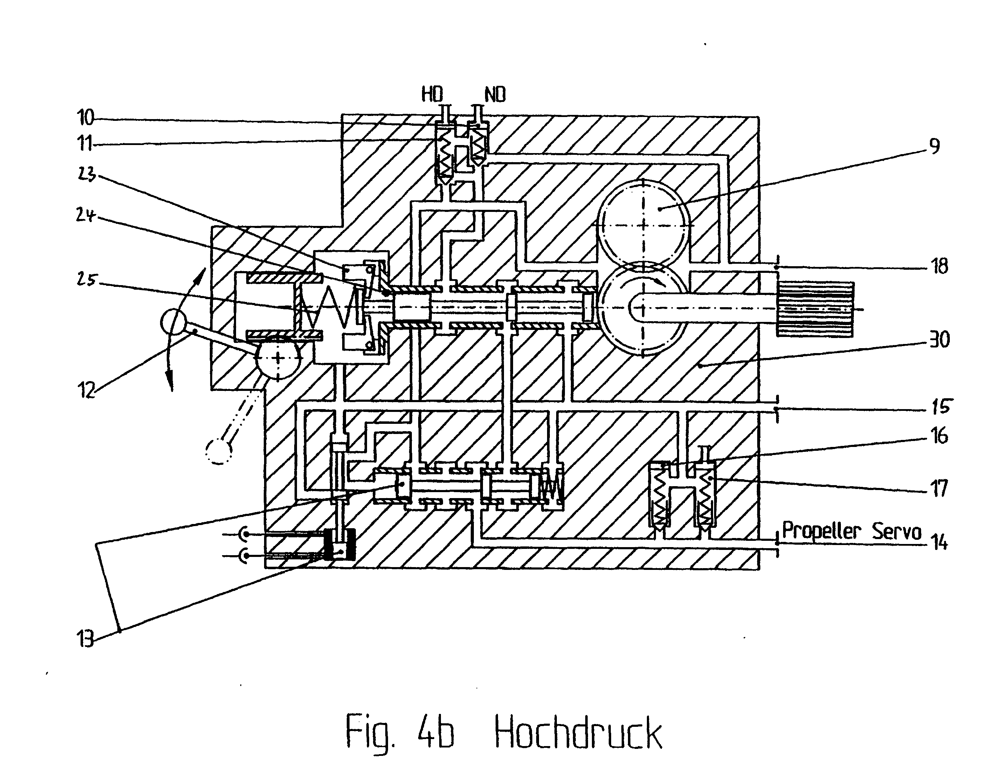

Die in Fig. 4a und 4b dargestellte hydraulische Steuereinheit 30 zeigt einen hydraulischen Propellerregler für konstante Drehzahl mit einer Pumpe 9, einem Normaldruckventil 1O, einem Hochdruckventil 11, einer Drehzahlreglereinheit mit Einstellhebel 12, einem Reglerantrieb 24, einer Reglerfeder 25, Fliehgewichten 23, einem Schaltventil für Normal-oder Hochdruck 13, eine Servodruckleitung zum Propeller 14, Rücklaufleitungen zum Triebwerkssumpf 15, einem Sicherheitsventil 16, einem Blattwinkelregler 17 und mit einer Versorgungsleitung vom Triebwerk 18.

Im folgenden wird die Arbeitsweise der hydraulisch reversierbaren Verstellpropeller-Einheit 20 beschrieben.

Die Steuereinheit (Regler) 30 gemäß Fig. 4a und 4b versorgt die hydraulische Verstelleinrichtung, d.h. den Servokolben 4 des Propellers 20 mit Hydraulikfluid mit zwei unterschiedlichen Drücken, wodurch sich die Propellerblätter über die Blattlagerungen 2 und die daran befestigten Fliehgewichte 3 in Richtung einer kleinen Steigung (Startstellung) verstellen, solange sich der Regler im Unterdrehzahlzustand befindet. Die Steuereinheit (Regler) 30 liefert im Normalbetrieb den Normaldruck, der je nach Triebwerksleistungseinstellung für Gleichlaufdrehzahl im Vorwärtsbetrieb des Flugzeugs (Fahrzeugs) sorgt. Dabei fließt das Hydrauliköl von der Pumpe 9 durch das Hochdruckventil 11 zum Normaldruckventil 10 und von dort durch die Drehzahlreglereinheit über das Schaltventil 13 zur Servodruckleitung 14. Soll die Blattsteigung vermindert werden, wird das Schaltventil 13 betätigt und die Normaldruckleitung gesperrt. Das Hydrauliköl fließt jetzt von der Pumpe 9 um die Drehzahlreglereinheit direkt zum Schaltventil 13 und weiter zur Servodruckleitung 14.

Ein System, bei dem der Öldruck zur Steigungsverminderung verwendet wird, ist an und für sich bekannt. Die Blattsteigung kann sich dabei stufenlos zwischen dem einstellbaren mechanischen Anschlag 6 für Startstellung und dem einstellbaren mechanischen Anschlag 5 für Reise- oder Segelstellung bewegen.

Wird nun eine flachere Blattsteigung als die Startstellung gewünscht, z.B. zum Verkürzen der Landestrecke oder zur besseren Manövrierfähigkeit am Boden bzw. im Wasser, müssen die Propellerblätter flacher bis hin zu einem negativen Blattwinkel verstellt werden können. Dies geschieht erfindungsgemäß dadurch, daß, wie oben beschrieben, über ein Schaltventil 13 die Servoleitung für das erste Überdruckventil 10 für den Normaldruck geschlossen und die Servoleitung für das zweite Überdruckventil 11 für den Hochdruck geöffnet wird. Die Aktivierung des Schaltventils 13 erfolgt entweder elektrisch über einen Schalter oder mechanisch über einen Bedienzug, der am Triebwerksleistungshebel angebracht sein kann.

Wird also der Leistungshebel auf Leerlauf und dann über eine Sperre zurück in Richtung Bremsstellung (Reverse) gezogen, aktiviert man die Hochdruckleitung. Da sich der Propeller im Unterdrehzahlzustand befindet, ist die Fliehkraftsperre 22 entriegelt und gibt den Innenkolben 19 frei, der sich dann bis zum mechanischen Anschlag 8 für die Bremsstellung (Reverse) bewegen kann. Hierdurch erreichen die Propellerblätter einen negativen Blattwinkel und erzeugen einen entsprechenden Bremsschub. Der Negativ-(Brems-) Schub ist dabei von der Triebwerksleistung abhängig. Diese muß entsprechend erhöht werden, wenn sich die Blätter am mechanischen Anschlag 8 für Bremsstellung (Reverse) befinden. Dies geschieht in bekannter Weise mittels einer Kurvenscheibe, um die Ansteuerung des Triebwerks zur Leistungserhöhung auch bei einer negativen Bewegung des Leistungshebels zu ermöglichen.

Weiterhin ist vorteilhaft, daß das Hochdruckhydraulikfluid nicht über den Drehzahlregler geregelt ist. Damit werden gefährliche Überdrehzahlen vermieden, die bei üblichen Bremsstellungssystemen auftreten können, wenn eine Drehzahl von mehr als 90% der Triebwerks-Startdrehzahl erreicht wird.

Soll nun aus der Bremsstellung (Reverse) zurück in die Startstellung verstellt werden, ist der Triebwerksleistungshebel vorwärts in Richtung Leerlauf zu verstellen, bis die Sperre für Bremsstellung überwunden ist. Dabei wird das Hochdruckservoöl inaktiv und die Blätter werden mittels der Federkraft wieder in Startstellung verstellt, wenn sich der Normaldruck eingestellt hat, wobei die Fliehkraftsperre 22 den Innenkolben 19 wieder mit dem Ringkolben 21 verriegelt, sobald die Drehzahl auf über ca. 1500 Upm gesteigert wird.

Damit ist der Bremsstellungsvorgang beendet.

Durch diese erfindungsgemäße neuartige System wird bei gleicher Sicherheit gegen unbeabsichtigte Bremsstellung die Betriebsicherheit erhöht, da ein korrosionsanfälliges Tellerfederpaket entfällt. Diese Vereinfachung vermindert das Gewicht, die Anzahl der Teile und damit die Kosten.

## Patentansprüche

1. Hydraulisch reversierbare Verstellpropeller-Einheit für Luft-, Land- und Wasserfahrzeuge mit einem Propeller mit mindestens zwei Blättern, deren Blattwinkel mittels einer Steuereinheit regelbar ist, wobei zwischen dem umlaufenden Propeller und der feststehenden Steuereinheit für die Blattwinkelansteuerung eine hydraulische Verbindung besteht, mit einem mittels eines Hydraulikfluids in zwei verschiedenen Druckbereichen beaufschlagbaren, federvorgespannten Kolben, und einstellbaren, mechanischen Anschlägen für die Startstellung, die Bremsstellung und Reise- oder Segelstellung,
**dadurch gekennzeichnet,**
**daß** der Kolben (4) als federvorgespannter Doppelkolben, bestehend aus einem Innenkolben (19) und einem darum angeordneten Ringkolben (21), die beide mittels einer Fliehkraftsperre (22) miteinander verriegelbar sind, ausgebildet ist,
**daß** der Anschlag (6) für die Startstellung zur Begrenzung des Verstellweges des verriegelten Doppelkolbens (4) ausgebildet ist, um unbeabsichtes Reversieren bei Drehzahlen von über etwa 1500 UPM zu verhindern und
**daß** die Bremsstellung nur bei entriegeltem Innenkolben und Propellerdrehzahlen von unter etwa 1500 UPM erreichbar ist, wenn sich der Propellerregler im Hochdruckbereich befindet.

2. Hydraulisch reversierbare Verstellpropeller-Einheit nach Anspruch 1, **dadurch gekennzeichnet, daß** die Steuereinheit (30) zur Schaffung von zwei unterschiedlichen Servodrücken ausgebildet ist, die einen Normaldruck für positiven Schub zum normalen Vorwärtsbetrieb von ca. 12-22 bar und einen Hochdruck für negativen Schub zum Bremsbetrieb von ca. 32-48 bar umfassen, wobei das Hochdruck-Hydraulikfluid ungeregelt ist, um Überdrehzahlen im Bremsbetrieb zu verhindern.

3. Hydraulisch reversierbare Verstellpropeller-Einheit nach Anspruch 1 oder 2, **dadurch gekennzeichnet, daß** ein elektrisch oder mechanisch ansteuerbares Schaltventil (13) zur Umschaltung der Steuereinheit (30) von Normaldruck auf Hochdruck bzw. von Hochdruck auf Normaldruck vorgesehen ist.

4. Hydraulisch reversierbare Verstellpropeller-Einheit nach einem der Ansprüche 1 bis 3, **dadurch gekennzeichnet, daß** in der Steuereinheit (30) ein Sicherheitsventil (16) vorgesehen ist, das im Normalbetrieb den Druck auf Normaldruck begrenzt, um ein unbeabsichtigtes Reversieren des Propellers (20) zu verhindern.

5. Hydraulisch reversierbare Verstellpropeller-Einheit nach einem der Ansprüche 1 bis 4, **dadurch gekennzeichnet, daß** in der Steuereinheit (30) in der Hochdruckstufe ein Blattwinkelregler (17) vorgesehen ist, der eine vom Servodruck abhängige stufenlose Blattwinkeleinstellung im Betabereich ermöglicht.

## Claims

1. Hydraulically reversible adjustable propeller unit for aircraft, land vehicles and watercraft, with a propeller having at least two vanes, the vane angle of which can be regulated by means of a control unit, wherein there is a hydraulic connection between the rotating propeller and the stationary control unit for the blade angle control, with a spring-biased piston, which can be acted upon by means of a hydraulic fluid in two different pressure ranges, and adjustable, mechanical stops for the start position, the braking position and travelling or feathering position,
**characterised in**
**that** the piston (4) is formed as a spring-biased double piston, consisting of an inner piston (19) and an annular piston (21) disposed around the latter, which pistons can be locked together by means of a centrifugal lock (22),
**that** the stop (6) for the start position is formed to limit the adjustment travel of the locked double piston (4) in order to prevent unintentional reversing at speeds exceeding approximately 1500 rpm, and
**that** the braking position can only be obtained if the inner piston is unlocked and the propeller speeds are below approximately 1500 rpm when the propeller regulator is in the high-pressure range.

2. Hydraulically reversible adjustable propeller unit according to Claim 1, **characterised in that** the control unit (30) is formed to produce two different servopressures, which comprise a normal pressure of approximately 12-22 bar for positive thrust for normal forward mode and a high pressure of approximately 32-48 bar for negative thrust for braking mode, wherein the high-pressure hydraulic fluid is unregulated in order to prevent overspeeds in braking mode.

3. Hydraulically reversible adjustable propeller unit according to Claim 1 or 2, **characterised in that** an electrically or a mechanically controllable switching valve (13) is provided to change the control unit (30) over from normal pressure to high pressure or from high pressure to normal pressure.

4. Hydraulically reversible adjustable propeller unit according to any one of Claims 1 to 3, **characterised in that** a safety valve (16) is provided in the control unit (30), which valve limits the pressure to normal pressure in normal mode in order to prevent unintentional reversing of the propeller (20).

5. Hydraulically reversible adjustable propeller unit according to any one of Claims 1 to 4, **characterised in that** a vane angle regulator (30) is provided in the control unit (30) in the high-pressure stage, which regulator enables the vane angle to be steplessly adjusted in the beta range in accordance with the servopressure.

## Revendications

1. Unité d'hélice à pas variable réversible hydrauliquement pour véhicules aériens, terrestres et aquatiques, avec une hélice à au moins deux pales dont l'angle de pale est réglable au moyen d'une unité de commande, une liaison hydraulique existant entre l'hélice tournante et l'unité de commande fixe pour la commande de l'angle d'hélice, avec un piston précontraint par ressort pouvant être alimenté au moyen d'un fluide hydraulique dans deux zones de pression différentes, et des butées mécaniques pour la position de démarrage, la position de freinage et la position de marche ou de drapeau,
**caractérisée par le fait**
**que** le piston (4) est réalisé sous forme de piston double précontraint par ressort, constitué d'un piston intérieur (19) et d'un piston annulaire (21) disposé autour qui peuvent être verrouillés tous deux au moyen d'un dispositif de blocage centrifuge (22) et
**que** la butée (6) pour la position de démarrage est conformée pour limiter le trajet de déplacement du double piston (4) verrouillé afin d'empêcher une inversion non voulue à des vitesses de rotation de plus d'environ 1500 tours/minute et
**que** la position de freinage ne peut être atteinte qu'avec le piston intérieur déverrouillé et des vitesses de rotation de l'hélice de moins d'environ 1500 tours/minute lorsque le régulateur d'hélice se trouve dans la zone de haute pression.

2. Unité d'hélice à pas variable réversible hydrauliquement selon la revendication 1,
**caractérisée par le fait que** l'unité de commande (30) est conformée pour créer deux servopressions différentes qui comprennent une pression normale d'environ 12-22 bar pour une poussée positive pour le fonctionnement normal en avant et une haute pression d'environ 32-48 bar pour une poussée négative pour le fonctionnement de freinage, le fluide hydraulique haute pression étant non réglé afin d'empêcher des survitesses de rotation en fonctionnement de freinage.

3. Unité d'hélice à pas variable réversible hydrauliquement selon la revendication 1 ou 2,
**caractérisée par le fait qu'**un relais pneumatique (13) pouvant être commandé électriquement ou mécaniquement est prévu pour la commutation de l'unité de commande (30) de la pression normale à la haute pression ou respectivement de la haute pression à la pression normale.

4. Unité d'hélice à pas variable réversible hydrauliquement selon l'une des revendications 1 à 3,
**caractérisée par le fait qu'**une vanne de sécurité (16) est prévue dans l'unité de commande (30), laquelle limite la pression à la pression normale en fonctionnement normal afin d'empêcher une inversion non voulue de l'hélice (20).

5. Unité d'hélice à pas variable réversible hydrauliquement selon l'une des revendications 1 à 4,
**caractérisée par le fait qu'**un régulateur d'angle de pale (17) est prévu dans l'unité de commande (30) dans l'étage haute pression, lequel permet un réglage d'angle de pale continu dépendant de la servopression dans la zone béta.
